# EUROPEAN PATENT SPECIFICATION

(11) **EP 2 835 277 B1**
(45) Date of publication and mention of the grant of the patent: **08.08.2018**
(21) Application number: 14180402.1
(22) Date of filing: 08.08.2014
(51) Int. Cl.: B60G 11/107, F16F 1/26, F16F 1/368, F16F 1/30

(54) **Support assembly for supporting a free end of a parabolic leaf spring**
Stützanordnung zur Unterstützung eines freien Endes einer parabolischen Blattfeder
Ensemble de support permettant de soutenir une extrémité libre d'un ressort à lame parabolique

(30) Priority: 08.08.2013 GB 201314188
(43) Date of publication of application: 11.02.2015
(73) Proprietor: Nugent Engineering Limited, Dungannon, County Tyrone BT70 2PP (GB)
(72) Inventor: Nugent, Shane, Dungannon, County Tyrone BT70 2PP (GB); Johansen, Poul, Dungannon, County Tyrone BT70 2PP (GB)
(74) Representative: FRKelly

(56) References cited:
- EP-A1- 0 082 426
- DE-A1- 1 907 183
- DE-C- 548 489
- GB-A- 679 098
- GB-A- 915 402
- US-A- 1 360 135
- US-A- 2 988 352
- US-A- 3 920 264

## Description

This invention relates to a support assembly for supporting a free end of a parabolic leaf spring, according to the preamble of claim 1. Examples of such support assemblies are disclosed in DE 19 07 183 A1, in US 2 988 352 A and in US 3 920 264 A. Figures 1 to 3 illustrate a prior art parabolic leaf spring assembly, typically used for supporting the axle or axles of a trailer. The known assembly comprises a leaf spring 2 pivotally mounted at one end to a vehicle chassis or body 4 to which an axle (not shown) is attached at an intermediate point thereof, a free end 6 of the leaf spring being slidably supported on an inclined support plate 8 mounted on the chassis or body 4. A rubber buffer 9 is mounted below the free end of the spring 2 to delimit downward motion of the free end 6 of the spring 2.

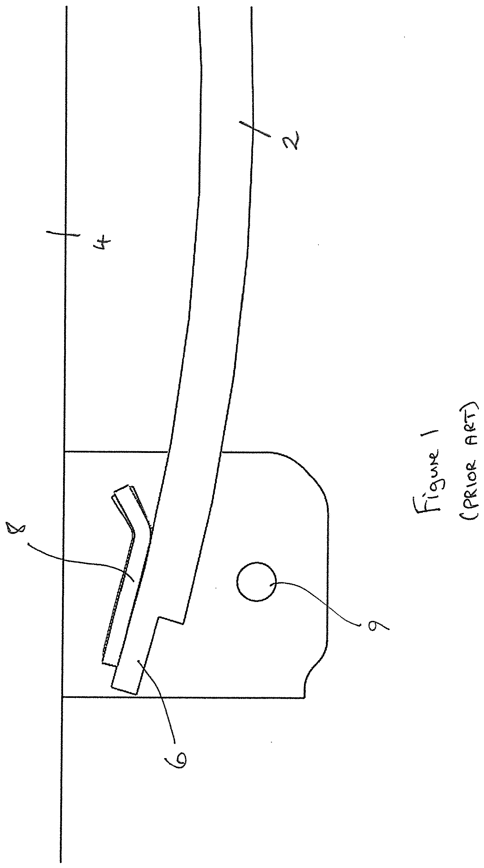

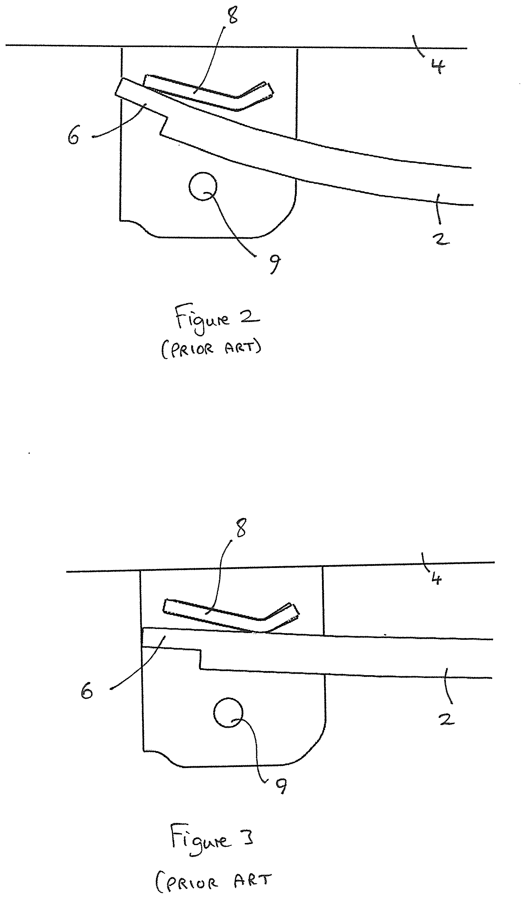

With this known arrangement, the angle between the free end 6 of the spring 2 relative to the surface of the inclined support plate 8 will change in accordance to the weight of the load on the trailer. As a result, the free end 6 of the spring 2 will rarely be resting flush on the inclined support plate 8 (i.e. parallel to the surface of the support plate 8). The support plate 8 is typically angled to match the angle of the free end of the spring 2 at a nominal or expected load, as shown in Figure 1. This results in the free end 6 of the spring 2 engaging only the trailing end of the support plate 8 when the trailer is empty (as shown in Figure 2) or engaging only the leading end of the support plate 8 when the trailer is heavily loaded (as shown in Figure 3). This frequent point contact between the free end 6 of the spring and the support plate 8 greatly increases the rate of wear on the spring 2 and support plate 8.

Another issue with the traditional system is that, when the trailer is driving on rougher terrain or hits a typical road obstacle, the spring 2 will bounce down onto the bottom rubber buffer 9 and will then rebound up and strike the rigid support plate 8 attached to the chassis or body 4. This will cause an unpleasantly loud banging sound and will also be felt in the towing vehicle and can result in damage to the spring 2 and/or support plate 8 and associated components.

It is an object of the present invention to provide an improved support assembly for supporting a free end of a parabolic leaf spring that overcomes the abovementioned problems.

According to a first aspect of the present invention there is provided a support assembly for supporting a free end of a parabolic leaf spring, the support assembly comprising a support member having a support surface upon which said fee end of leaf spring may be slidably supported, said support member being pivotally mounted on the chassis or body to maintain the support surface parallel to said free end of the leaf spring to ensure even contact between the support surface and the free end of the leaf spring.

Said pivot axis of the support member extends horizontally and transverse to said leaf spring.

Said assembly includes a resilient member supporting a leading end of the support member to bias the leading end of the support member in a substantially downwards direction, said resilient member permitting deflection of the leading end of the support surface of the support member in an upwards direction under the action of the free end of the leaf spring, wherein the pivot axis of the support member is located adjacent a trailing end of the support member.

Preferably the support surface of the support member has an upwardly curved leading end.

In one embodiment said resilient member comprises a hollow tube formed from a resilient material, said hollow tube being located above the leading end of the support member. The resilient member may arranged to be compressed between the leading end of the support member and the chassis or body of the vehicle. Preferably an upper face of the upwardly curved leading end of the support surface of the support member engages the resilient member.

Preferably said support member is pivotally mounted between a pair of side plates of a U shaped base member. Preferably the resilient member is located between a base portion of the base member and the leading end of the support member.

According to a second aspect of the present invention there is provided a leaf spring assembly comprising a leaf spring pivotally mounted at one end to a vehicle chassis or body and which has an axle attached thereto at an intermediate point, a free end of the leaf spring being supported by a support assembly in accordance with the first aspect of the present invention.

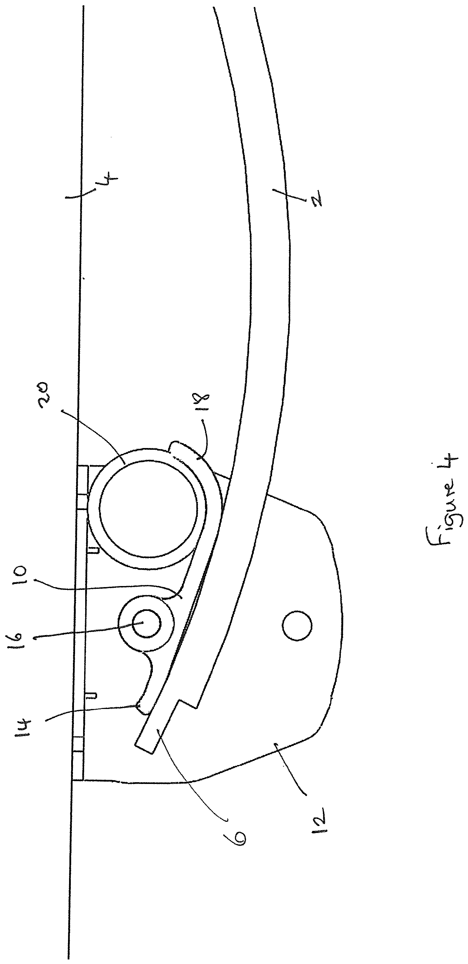

An embodiment of the present invention will now be described, by way of example only, with reference to the accompanying drawings, in which :-
Figure 4 is a side view of a leaf spring support assembly in accordance with an embodiment of the present invention under no load;
Figure 5 is a side view of the support assembly of Figure 1 under part load; and
Figure 6 is a side view of the support assembly of Figure 1 under full load.

A support assembly for supporting a free end 6 of a parabolic leaf spring 3 in accordance with an embodiment of the present invention comprises a support member 10 pivotally mounted between a pair of side plates of a spring hanger 12 mounted on the chassis or body 4 of a vehicle, such as a trailer. The support member 10 is mounted on the spring hanger 12 for pivotal movement about a horizontal pivot axis extending transverse to the leaf spring.

The lower surface of the support member 10 defines a support surface adapted to engage and support a free end 6 of the parabolic leaf spring 2. The pivotal mounting of the support member 10 enables the support surface of the support member to remain substantially parallel to the free end 6 of the leaf spring 3, regardless of the angle of the free end 6 of the leaf spring 3 and thus regardless of the load applied to the spring 3. The pivot axis is arranged adjacent to a trailing end 14 of the support member 10. The pivotal mounting of the support member 10 may be defined by a pivot bolt or spindle 16 passing between the side plates of the spring hanger 12 and through a receiving aperture or bush in the support member 10.

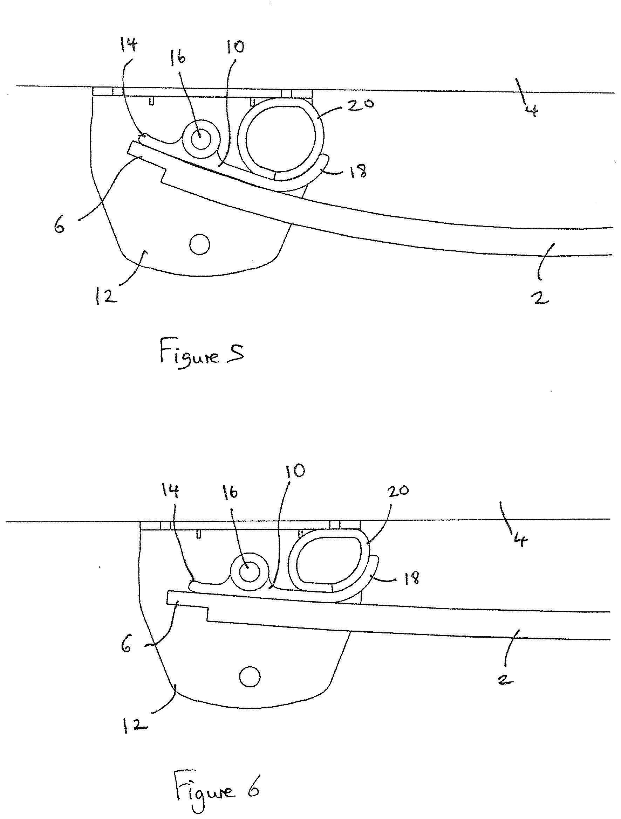

A portion of the support member defining a leading end 18 of the support member 10 is curved upwardly. A resilient tube 20, formed from a resilient material, preferably a polymeric material, such as rubber, is located between the side plates of the spring hanger 12, above the leading end 18 of the support member 10 to be engaged by the upwardly curved leading end 18 of the support member 10. The resilient tube 20 is compressible to allow limited upward deflection of the leading end 18 of the support member 10 when the angle of the free end 6 of the spring 3 changes due to an increased load on the spring 3, as shown in Figures 5 and 6. This maintains the support surface of the support member 10 parallel to the free end 6 of the spring 3 and acts as a shock absorber, biasing the leading end 18 of the support member 10 downwardly, thus maintaining contact between the support surface of the support member 10 and the free end 6 of the spring 3 as the load on the spring 3 varies during use of the trailer.

This helps to reduce the wear on the spring 3 and support member 10 and also promotes a smoother ride. The support member 10 will pivot according to the load on the spring 3 due to the resilient support of the leading end 18 if the support member 10 by the tube 20. The resilient tube 20 will want to try and regain its original shape and thus will try push the leading end 18 of the support member 10 back down and thus the support surface of the support member 10 will always run in line with the free end 6 of the spring 3.

The added benefit of this arrangement is that, when the trailer hits a bump and the spring rebounds away from and back towards the support member 10 and strikes the support member 10, the leading end 18 of the support member 10 will be deflected upwardly, compressing the resilient tube 20 and absorbing the impact. This creates a dampening affect and thus the driver of the towing vehicle does not feel the impact as much.

The resiliently biased pivotally mounted support member 10 provides an equalising effect, as regardless of the load on the trailer, the angle of the free end 6 of the spring 2 will be equal to that of the support surface of the support member 10, thereby reducing wear on the support surface and spring and providing a smoother and quieter ride.

The invention is not limited to the embodiment(s) described herein but can be amended or modified without departing from the scope of the invention as defined by the claims.

## Claims

1. A support assembly for supporting a free end (6) of a parabolic leaf spring (2), the support assembly comprising a support member (10) having a support surface upon which said fee end (6) of leaf spring (2) may be slidably supported, said support member (10) being pivotally mounted on the chassis or body to maintain the support surface parallel to said free end (6) of the leaf spring (2) to ensure even contact between the support surface and the free end (6) of the leaf spring (2), said pivot axis of the support member (10) extending horizontally and transverse to said leaf spring (2), a resilient member (20) supporting a leading end (18) of the support member (10) to bias the leading end (18) of the support member (10) in a substantially downwards direction, said resilient member (20) permitting deflection of the leading end (18) of the support surface of the support member (10) in an upwards direction under the action of the free end (6) of the leaf spring (2), **characterised in that** the pivot axis of the support member (10) is located adjacent a trailing end (14) of the support member (10).

2. An assembly as claimed in claim 1, wherein said resilient member (20) comprises a hollow tube formed from a resilient material, said hollow tube (20) being located above the leading end (18) of the support member (10).

3. An assembly as claimed in any preceding claim, wherein the leading end (18) of the support member (10) curves upwardly, an upper face of the upwardly curved leading end (18) of the support surface engaging the resilient member (20).

4. An assembly as claimed in any preceding claim, wherein said support member (10) is pivotally mounted between a pair of side plates of a U shaped base member or hanger (12).

5. An assembly as claimed in claim 4, wherein the resilient member (20) is located between a base portion of the base member (12) and the leading end (18) of the support member (10).

6. A leaf spring assembly comprising a leaf spring (3) pivotally mounted at one end to a vehicle chassis or body and which has an axle attached thereto at an intermediate point, a free end (6) of the leaf spring (3) being supported by a support assembly in accordance with any of claims 1 to 5.

## Patentansprüche

1. Lagerungsanordnung zum Lagern eines freien Endes (6) einer Parabel-Blattfeder (2), wobei die Lagerungsanordnung ein Lagerungselement (10) mit einer Lagerfläche aufweist, auf der das genannte freie Ende (6) der Blattfeder (2) gleitfähig gelagert werden kann, wobei das genannte Lagerungselement (10) drehbar am Fahrgestell oder an der Karosserie montiert ist, um die Lagerfläche zu dem genannten freien Ende (6) der Blattfeder (2) parallel zu halten, um gleichmäßigen Kontakt zwischen der Lagerfläche und dem freien Ende (6) der Blattfeder (2) sicherzustellen, wobei die genannte Drehachse des Lagerungselements (10) sich horizontal und quer zur genannten Blattfeder (2) erstreckt, wobei ein elastisches Element (20) ein vorderes Ende (18) des Lagerungselements (10) lagert, um das vordere Ende (18) des Lagerungselements (10) im Wesentlichen in einer Abwärtsrichtung vorzuspannen, wobei das genannte elastische Element (20) unter der Wirkung des freien Endes (6) der Blattfeder (2) die Ablenkung des vorderen Endes (18) der Lagerfläche des Lagerungselements (10) in einer Aufwärtsrichtung zulässt, **dadurch gekennzeichnet, dass** die Drehachse des Lagerungselements (10) neben einem hinteren Ende (14) des Lagerungselements (10) liegt.

2. Anordnung nach Anspruch 1, wobei das genannte elastische Element (20) eine hohle Röhre aufweist, die aus einem elastischen Material hergestellt ist, wobei die genannte hohle Röhre (20) über dem vorderen Ende (18) des Lagerungselements (10) liegt.

3. Anordnung nach einem der vorhergehenden Ansprüche, wobei das vordere Ende (18) des Lagerungselements (10) sich nach oben krümmt, wobei eine Oberseite des nach oben gekrümmten vorderen Endes (18) der Lagerfläche an dem elastischen Element (20) in Anlage ist.

4. Anordnung nach einem der vorhergehenden Ansprüche, wobei das genannte Lagerungselement (10) drehbar zwischen einem Paar Seitenplatten eines bzw. einer U-förmigen Basiselements oder Aufhängung (12) montiert ist.

5. Anordnung nach Anspruch 4, wobei das elastische Element (20) zwischen einem Basisteil des Basiselements (12) und dem führenden Ende (18) des Lagerungselements (10) liegt.

6. Blattfederanordnung, die eine Blattfeder (3) aufweist, die an einem Ende drehbar an einem Fahrgestell oder einer Karosserie eines Fahrzeugs montiert ist und an welcher an einem mittleren Punkt eine Achse angebracht ist, wobei ein freies Ende (6) der Blattfeder (3) durch eine Lagerungsanordnung nach einem der Ansprüche 1 bis 5 gelagert wird.

## Revendications

1. Ensemble de support servant à supporter une extrémité libre (6) d'un ressort à lame parabolique (2), l'ensemble de support comportant un élément de support (10) ayant une surface de support sur laquelle ladite extrémité libre (6) du ressort à lame (2) peut être supportée de manière coulissante, ledit élément de support (10) étant monté de manière pivotante sur le châssis ou la carrosserie à des fins de maintien de la surface de support parallèle par rapport à ladite extrémité libre (6) du ressort à lame (2) pour assurer un contact plan entre la surface de support et l'extrémité libre (6) du ressort à lame (2), ledit axe de pivot de l'élément de support (10) s'étendant à l'horizontale et de manière transversale par rapport audit ressort à lame (2), un élément élastique (20) supportant une extrémité avant (18) de l'élément de support (10) à des fins de sollicitation de l'extrémité avant (18) de l'élément de support (10) dans une direction allant sensiblement vers le bas, ledit élément élastique (20) permettant une déflexion de l'extrémité avant (18) de la surface de support de l'élément de support (10) dans une direction allant vers le haut sous l'action de l'extrémité libre (6) du ressort à lame (2), **caractérisé en ce que** l'axe de pivot de l'élément de support (10) se trouve de manière adjacente par rapport à une extrémité arrière (14) de l'élément de support (10).

2. Ensemble selon la revendication 1, dans lequel ledit élément élastique (20) comporte un tube creux formé à partir d'un matériau élastique, ledit tube creux (20) étant situé au-dessus de l'extrémité avant (18) de l'élément de support (10).

3. Ensemble selon l'une quelconque des revendications précédentes, dans lequel l'extrémité avant (18) de l'élément de support (10) va en se courbant vers le haut, une face supérieure de l'extrémité avant courbée vers le haut (18) de la surface de support se mettant en prise avec l'élément élastique (20).

4. Ensemble selon l'une quelconque des revendications précédentes, dans lequel ledit élément de support (10) est monté de manière pivotante entre une paire de plaques latérales d'un élément de suspension ou élément de base en forme de U (12).

5. Ensemble selon la revendication 4, dans lequel l'élément élastique (20) est situé entre une partie de base de l'élément de base (12) et l'extrémité avant (18) de l'élément de support (10).

6. Ensemble de ressort à lame comportant un ressort à lame (3) monté de manière pivotante au niveau d'une extrémité d'un châssis de véhicule ou d'une carrosserie de véhicule et qui a un essieu attaché à celui-ci au niveau d'un point intermédiaire, une extrémité libre (6) du ressort à lame (3) étant supportée par un ensemble de support selon l'une quelconque des revendications 1 à 5.
